# EUROPEAN PATENT SPECIFICATION

(11) **EP 1 939 891 B1**
(45) Date of publication and mention of the grant of the patent: **27.03.2013**
(21) Application number: 07123684.8
(22) Date of filing: 19.12.2007
(51) Int. Cl.: G21C 13/10, G21C 19/28, G21F 9/00

(54) **Methods for operating and methods for reducing post-shutdown radiation levels of nuclear reactors**
Betriebsverfahren für Nuklearreaktoren und Verfahren zur Reduktion des nach deren Abschaltung vorliegenden Strahlungsniveaus
Procédés pour commander et procédés pour réduire les niveaux de radiation après arrêt de réacteurs nucléaires

(30) Priority: 29.12.2006 US 647432
(43) Date of publication of application: 02.07.2008
(73) Proprietor: GENERAL ELECTRIC COMPANY, Schenectady, NY 12345 (US)
(72) Inventor: Hettiarachchi, Samson, Menlo Park, CA 94025 (US); Varela, Juan Alberto, San Jose, CA 95123 (US); Diaz, Thomas Pompilio, San Martin, CA 95046 (US)
(74) Representative: Szary, Anne Catherine

(56) References cited:
- JP-A- 2005 003 565
- US-A- 3 873 362
- US-A- 4 476 047
- US-A- 5 024 805
- US-A- 5 818 893

## Description

### BACKGROUND

### Field

Example embodiments relate to methods for operating nuclear reactors and methods for reducing post-shutdown radiation levels of nuclear reactors. Additionally, example embodiments relate to methods for controlled radionuclide release from at least one internal surface of nuclear reactors.

### Description of Related Art

Generally, nuclear reactors create heat through fission of one or more selected heavy elements in a reactor core. The fission process is typically sustained by thermal neutrons. In many reactors, water is used as a coolant (i.e., to remove heat from the reactor core) and/or a moderator (i.e., to reduce the energy level of the high-energy neutrons). Such reactors include, for example, light-water reactors (i.e., boiling water reactor ("BWR") and pressurized water reactor ("PWR")) and heavy-water reactors (i.e., CANDU).

Because of the extreme temperatures (i.e., up to about 385° C) and/or pressures (i.e., up to about 24.8 MPa (3600 psia)) involved, purity of the reactor water is an important issue. Standard measurements of reactor water purity include pH, conductivity, and/or dissolved solids, among others.

Materials used to construct reactors include carbon steel, Inconel, stainless steel, Stellite, and/or other metals. Over time, corrosion and/or damage of these construction materials increases the concentration of soluble (ionic) impurities and/or insoluble impurities (referred to in this application as "crud") in the reactor water. These soluble and/or insoluble impurities may include elemental chromium (Cr), cobalt (Co), iron (Fe), manganese (Mn), and/or Nickel (Ni) from the metals discussed above.

When these elements are subjected to high levels of radiation-such as when they are in the reactor core or on in-core surfaces-they can become radioactive (i.e., ⁵¹Cr, ⁵⁸Co, ⁶⁰Co, ⁵⁹Fe, ⁵⁴Mn). Subsequently, these radioactive elements in the soluble and/or insoluble impurities may end up on out-of-core surfaces. When the reactor is shutdown for maintenance, the radiation levels caused by these radioactive elements on out-of-core surfaces can present difficulties due to controls on personnel radiation exposure, generally measured in Man-Rem. One Man-Rem (0.01 Sv) of radiation exposure has been estimated to translate to a cost of at least $20,000. Due to its long half-life (about 5.27 years), radiation levels due to ⁶⁰Co may present a particularly vexing problem.

When the reactor is shutdown, the radioactive soluble and/or insoluble impurities may be removed by mechanical, chemical, and/or electrolytic methods to reduce the post-shutdown radiation levels. Each of these methods is limited by cost, the length of time required for implementation, potential to damage the reactor (i.e., due to the use of acidic and/or other corrosive chemicals), immediate effectiveness at reducing radiation levels, and/or long-range effectiveness at reducing radiation levels (in many cases, the results are only temporary).

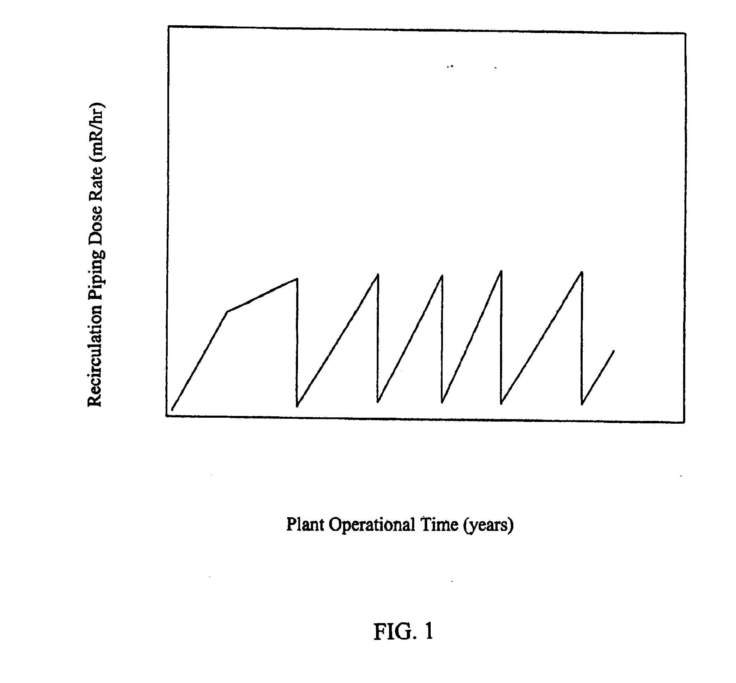

FIG. 1 is a graph showing an example of the long-range effectiveness of decontamination, as discussed above. FIG. 1 shows the effect of decontamination on reactor recirculation piping dose rate (in millirem/hour ("mR/hr")) versus plant operational time (in years). In this case, the recirculation piping was decontaminated after almost every shutdown (as indicated by sharp drops in the recirculation piping dose rate). However, after each decontamination, the recirculation piping dose rate returned to pre-decontamination levels after reactor startup and operation.

When the reactor is operating, the radioactive soluble and/or insoluble impurities may be removed, at least in part, by one or more demineralizers, filters, ion exchangers, and/or other devices (collectively referred to in this application as a Reactor Water Cleanup System ("RWCS")). RWCSs are known to one of ordinary skill in the art.

In addition or in the alternative, when the reactor is operating, the buildup of radioactive soluble and/or insoluble impurities and/or the deposition of radioactive soluble and/or insoluble impurities on in-core surfaces (where they are subjected to high levels of radiation) may be inhibited or substantially prevented by the addition of specific chemicals to the reactor water. The addition of such chemicals is discussed, for example, in U.S. Patent Nos. 4,722,823 ("the '823 patent"), 4,756,874 ("the '874 patent"), 4,759,900 ("the '900 patent"), 4,950,449 ("the '449 patent"), 5,245,642 ("the '642 patent"), and 5,896,433 ("the '433 patent").

These chemicals and/or makeup water may be added through one or more circulating, charging, and/or equivalent systems (collectively referred to in this application as a Circulating Water System ("CWS")). CWSs are known to one of ordinary skill in the art.

### SUMMARY

Example embodiments provide methods for operating nuclear reactors. Also, example embodiments provide methods for reducing post-shutdown radiation levels of nuclear reactors. Additionally, example embodiments provide methods for controlled radionuclide release from at least one internal surface of nuclear reactors. Moreover, example embodiments provide methods for controlling water chemistry in nuclear reactors.

In an example embodiment, a method for operating a nuclear reactor includes adding one or more chemicals to water in the reactor prior to reactor shutdown, during reactor shutdown, or prior to and during reactor shutdown. The one or more chemicals triggers release of one or more radioactive substances from at least one out-of-core surface of the reactor into the reactor water.

The one or more chemicals also triggers release of one or more radioactive substances from at least one out-of-core surface of the reactor into the reactor water.

In example embodiments, the methods for reducing post-shutdown radiation levels of a nuclear reactor include adding one or more metals, metal ions, metal compounds, metals and metal ions, metals and metal compounds, metal ions and metal compounds, or metals, metal ions, and metal compounds to water in the reactor prior to reactor shutdown, during reactor shutdown, or prior to and during reactor shutdown, wherein one of the metals, metal ions, metal compounds, metals and metal ions, metals and metal compounds, metal ions and metal compounds, or metals, metal ions, and metal compounds comprises platinum having a concentration in the reactor water that is greater than or equal to 1 part per trillion and less than or equal to about 75 parts per trillion.

The concentration of further metals, metal ions, metal compounds, metals and metal ions, metals and metal compounds, metal ions and metal compounds, or metals, metal ions, and metal compounds in the reactor water may be greater than or equal to about 1 ppt and less than or equal to about 900 ppt. Alternatively the concentration of the further or more metals, metal ions, metal compounds, metals and metal ions, metals and metal compounds, metal ions and metal compounds, or metals, metal ions, and metal compounds in the reactor water

may be greater than or equal to about 1 ppt and less than or equal to about 10 ppb. The one or more metals, metal ions, metal compounds, metals and metal ions, metals and metal compounds, metal ions and metal compounds, or metals, metal ions, and metal compounds may include in addition to platinum one or more of aluminum, cerium, chromium, gold, hafnium, indium, iridium, iron, manganese, molybdenum, nickel, niobium, osmium, palladium, potassium, rhodium, ruthenium, sodium, tantalum, terbium, tin, titanium, tungsten, vanadium, yttrium, and zirconium.

In the example embodiments, the method controls radionuclide release from at least one internal surface of a nuclear reactor. The one or more chemicals, which includes platinum triggers release of one or more radioactive substances from at least one out-of-core, in-core, or out-of-core and in-core surface of the reactor into the reactor water.

### BRIEF DESCRIPTION OF THE DRAWINGS

The present invention will become more fully understood from the detailed description given below and the accompanying drawings, wherein like elements are represented by like reference numerals, which are given by way of illustration only and thus are not limiting on the present invention and wherein:
FIG. 1 is a graph showing an example of the long-range effectiveness of decontamination;
FIG. 2 is a graph showing the effect of chemical injection on ⁵⁸Co and ⁶⁰Co activity according to an example embodiment;
FIG. 3 is a graph showing the effect of chemical injection on ⁵¹Cr activity according to the example embodiment of FIG. 2;
FIG. 4 is a graph showing the effect of chemical injection on ⁵⁴Mn activity according to the example embodiment of FIG. 2;
FIG. 5 is a graph showing the effect of chemical injection on ⁵⁹Fe activity according to the example embodiment of FIG. 2;
FIG. 6 is a graph showing the effect of chemical injection on ⁵⁸Co and ⁶⁰Co activity according to another example embodiment;
FIG. 7 is a graph showing the effect of chemical injection on ⁵¹Cr activity according to the example embodiment of FIG. 6;
FIG. 8 is a graph showing the effect of chemical injection on ⁵⁴Mn activity according to the example embodiment of FIG. 6;
FIG. 9 is a graph showing the effect of chemical injection on ⁵⁹Fe activity according to the example embodiment of FIG. 6; and
FIG. 10 is a graph showing an example of the effectiveness of the method of FIGs. 2-5.

### DETAILED DESCRIPTION OF EXAMPLE EMBODIMENTS

Example embodiments will now be described more fully with reference to the accompanying drawings. Embodiments, however, may be embodied in many different forms and should not be construed as being limited to the example embodiments set forth herein. Rather, these example embodiments are provided so that this disclosure will be thorough and complete, and will fully convey the scope to those skilled in the art.

As used herein, the term "and/or" includes any and all combinations of one or more of the associated listed items.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the example embodiments.

The terminology used herein is for the purpose of describing particular example embodiments only and is not intended to be limiting. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of stated features, integers, steps, operations, elements, and/or components, but do not preclude the presence or addition of one or more other features, integers, steps, operations, elements, and/or components.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference will now be made to example embodiments, which are illustrated in the accompanying drawings, wherein like reference numerals refer to the like components throughout.

In an example embodiment, a method for operating a nuclear reactor includes adding one or more chemicals to water in the reactor prior to reactor shutdown, during reactor shutdown, or prior to and during reactor shutdown, wherein the one or more chemicals triggers release of one or more radioactive substances from at least one out-of-core surface of the reactor into the reactor water.

In addition to platinum (Pt), the one or more chemicals may include, for example, one or more of the following metals (or ions or compounds of the metals): cerium (Ce), gold (Au), hafnium (Hf), indium (In), iridium (Ir), molybdenum (Mo), nickel (Ni), niobium (Nb), osmium (Os), palladium (Pd), rhodium (Rh), ruthenium (Ru), tantalum (Ta), terbium (Tb), tin (Sn), titanium (Ti), Tungsten (W), vanadium (V), yttrium (Y), zinc (Zn), and zirconium (Zr).

In addition or in the alternative, the one or more chemicals in addition to platinum (Pt), may include, for example, one or more of the following metals (or ions or compounds of the metals): aluminum (Al), barium (Ba), beryllium (Be), bismuth (Bi), calcium (Ca), lanthanum (La), magnesium (Mg), potassium (K), rhenium (Re), scandium (Sc), sodium (Na), and strontium (Sr).

In addition , the one or more chemicals may include one or more of the non-radioactive metals (or ions or compounds of the metals) of the Lanthanide series and/or Actinide series.

In addition, the one or more chemicals may include, in controlled amounts and/or with control of isotopic distribution, one or more of the following metals (or ions or compounds of the metals): chromium (Cr), iron (Fe), and manganese (Mn).

In addition, the one or more chemicals may include, for example, one or more compounds including one or more noble metals (or ions or compounds of the metals). Examples include H₂Pt(OH)₆, HNaPt(OH)₆, Na₂Pt(OH)₆, and Na₃Rh(NO₂)₆.

In addition, the one or more chemicals may include, for example, one or more compounds of the form MₓA_{y}, where M represents one or more metals acceptable in a nuclear-reactor-water environment (such as, for example, chromium, iridium, iron, manganese, nickel, niobium, osmium, palladium, platinum, potassium, rhodium, ruthenium, sodium, tantalum, titanium, tungsten, vanadium, yttrium, zinc, and/or zirconium) and A represents one or more anions (such as, for example, hydroxide, nitrate, nitrite, and/or any other simple or complex anion), oxides, hydroxides, oxyhydroxides, or the like acceptable in a nuclear-reactor-water environment Examples include platinum(IV) oxide (Pt(IV)O₂), platinum(IV) oxide-hydrate (Pt(IV)O₂•xH₂O, where x is 1-10), rhodium(II) acetate (Rh(II)ac₂), rhodium(III) nitrate (Rh(III)(NO₃)₃), rhodium(III) oxide (Rh(III)₂O₃), rhodium(III) oxide-hydrate (Rh(III)₂O₃ •xH₂O, where x is 1-10), rhodium(III) phosphate (Rh(III)PO₄), and rhodium(III) sulphate (Rh(III)₂(SO₄)₃).

In addition, the one or more chemicals may include, for example, one or more compounds of the form (NH₃)ₓM_{y}A_{z}, where M and A may be defined as above. Examples include (NH₃)₄Pt(NO₃)₂ and (NH₃)₂Pt(NO₂)₂.

In addition, the one or more chemicals may include, for example, at least one compound of one or more anions and/or one or more cations. The one or more anions may include, for example, anion(s) of one or more metals listed above. Similarly, the one or more cations may include, for example, cation(s) of one or more metals listed above. The one or more anions and/or the one or more cations may be, for example, acceptable in a nuclear-reactor-water environment.

Purity of the one or more chemicals may be specified, directly or indirectly. For example, the chemical compound may comprise Na₂Pt(OH)₆, consist essentially of Na₂Pt(OH)₆, or consist of Na₂Pt(OH)₆.

The one or more chemicals may be added to the reactor water using, for example, a CWS. But the addition may be at any location of the reactor as long as the addition is practically achievable and the one or more chemicals are added to the reactor water. The one or more chemicals may be, for example, dissolved in water to form a solution. In addition, the one or more chemicals and/or the solution may be diluted prior to being added to the reactor water. Due to the large volumetric flow rate of the reactor water, the one or more chemicals and/or the solution may be further diluted by a significant factor.

The one or more chemicals may be added to the reactor water by injection. The injection rate of the one or more chemicals may be, for example, greater than or equal to about 1 ml/min and less than or equal to about 10 l/min. In an example embodiment, the injection rate of the one or more chemicals may be, for example, greater than or equal to about 1 ml/min and less than or equal to about 100 ml/min. The injection rate of one or more metals, metal ions, metal compounds, metals and metal ions, metals and metal compounds, metal ions and metal compounds, or metals, metal ions, and metal compounds may be, for example, greater than or equal to about 0.1 mg/hr and less than or equal to about 10 g/hr. In an example embodiment, the injection rate of the one or more metals, metal ions, metal compounds, metals and metal ions, metals and metal compounds, metal ions and metal compounds, or metals, metal ions, and metal compounds may be, for example, greater than or equal to about 0.4 mg/hr and less than or equal to about 0.7 g/hr.

The one or more chemicals may be added to the reactor, for example, prior to shutdown, during shutdown, and/or after shutdown. In addition or in the alternative, the one or more chemicals may be added to the reactor, for example, with a specific timing relative to the shutdown, at predetermined time(s), periodically, continuously, or as otherwise desired.

The platinum has a concentration in the reactor water that is greater than or equal to 1 part per trillion and less than or equal to about 75 parts per trillion.

The concentration of the platinum and one or more chemicals (or ions from the platinum and one or more chemicals) in the reactor water may be, for example, greater than or equal to about 1, 5, 10, 20, 30, 40, 50, 75, 100, 150, 200, 250, 300, 350, 400, 450, 500, 550, 600, 650, 700, 750, 800, 850, 900, 950, or more parts per trillion ("ppt"). In addition, the concentration of the platinum and one or more chemicals (or ions from the platinum and one or more chemicals) in the reactor water may be, for example, greater than or equal to about 1, 1.5, 2, 2.5, 3, 3.5, 4, 4.5, 5, 5.5, 6, 6.5, 7, 7.5, 8, 8.5, 9, 9.5, 10, or more parts per billion ("ppb"). The concentration of the platinum and one or more chemicals (or ions from the platinum and one or more chemicals) in the reactor water may be, for example, less than or equal to about 10, 9.5, 9, 8.5, 8, 7.5, 7, 6.5, 6, 5.5, 5, 4.5, 4, 3.5, 3, 2.5, 2, 1.5, 1, or fewer ppb. In addition, the concentration of the platinum and one or more chemicals (or ions from the platinum and one or more chemicals) in the reactor water may be, for example, less than or equal to about 950, 900, 850, 800, 750, 700, 650, 600, 550, 500, 450, 400, 350, 300, 250, 200, 150, 100, 75, 50, or fewer ppt.

In an example embodiment, the concentration of the platinum and one or more chemicals (or ions from the platinum and one or more chemicals) in the reactor water may be greater than or equal to about 1 ppt and less than or equal to about 10 ppb. In another example embodiment, the concentration of the platinum and one or more chemicals (or ions from the platinum and one or more chemicals) in the reactor water may be greater than or equal to about 5 ppt and less than or equal to about 5 ppb. In yet another example embodiment, the concentration of the platinum and one or more chemicals (or ions from the platinum and one or more chemicals) in the reactor water may be greater than or equal to about 50 ppt and less than or equal to about 500 ppt. Further example embodiments include other combinations of the "greater than or equal to about" and/or "less than or equal to about" concentrations discussed above.

Similarly, the concentration of the platinum and one or more metals, metal ions, metal compounds, metals and metal ions, metals and metal compounds, metal ions and metal compounds, or metals, metal ions, and metal compounds in the reactor water may be, for example, greater than or equal to about 1, 5, 10, 20, 30, 40, 50, 75, 100, 150, 200, 250, 300, 350, 400, 450, 500, 550, 600, 650, 700, 750, 800, 850, 900, 950, or more ppt. In addition, the concentration of the platinum and one or more metals, metal ions, metal compounds, metals and metal ions, metals and metal compounds, metal ions and metal compounds, or metals, metal ions, and metal compounds in the reactor water may be, for example, greater than or equal to about 1, 1.5, 2, 2.5, 3, 3.5, 4, 4.5, 5, 5.5, 6, 6.5, 7, 7.5, 8, 8.5, 9, 9.5, 10, or more ppb.

The concentration of the platinum and one or more metals, metal ions, metal compounds, metals and metal ions, metals and metal compounds, metal ions and metal compounds, or metals, metal ions, and metal compounds in the reactor water may be, for example, less than or equal to about 10, 9.5, 9, 8.5, 8, 7.5, 7, 6.5, 6, 5.5, 5, 4.5, 4, 3.5, 3, 2.5, 2, 1.5, 1, or fewer ppb. In addition, the concentration of the platinum and one or more metals, metal ions, metal compounds, metals and metal ions, metals and metal compounds, metal ions and metal compounds, or metals, metal ions, and metal compounds in the reactor water may be, for example, less than or equal to about 950, 900, 850, 800, 750, 700, 650, 600, 550, 500, 450, 400, 350, 300, 250, 200, 150, 100, 75, 50, or fewer ppt.

In an example embodiment, the concentration of the platinum and one or more metals, metal ions, metal compounds, metals and metal ions, metals and metal compounds, metal ions and metal compounds, or metals, metal ions, and metal compounds in the reactor water may be greater than or equal to about 1 ppt and less than or equal to about 10 ppb. In another example embodiment, the concentration of the platinum and one or more metals, metal ions, metal compounds, metals and metal ions, metals and metal compounds, metal ions and metal compounds, or metals, metal ions, and metal compounds in the reactor water may be greater than or equal to about 5 ppt and less than or equal to about 5 ppb. In yet another example embodiment, the concentration of the platinum and one or more metals, metal ions, metal compounds, metals and metal ions, metals and metal compounds, metal ions and metal compounds, or metals, metal ions, and metal compounds in the reactor water may be greater than or equal to about 50 ppt and less than or equal to about 500 ppt. Further example embodiments include other combinations of the "greater than or equal to about" and/or "less than or equal to about" concentrations discussed above.

The platinum and possibly chemicals trigger release of one or more radioactive substances from at least one out-of-core surface of the reactor into the reactor water. Also, the platinum and possibly further chemicals may trigger release of one or more radioactive substances from at least one in-core surface of the reactor into the reactor water. The one or more radioactive substances may include, for example, one or more of ⁵¹Cr, ⁵⁸Co, ⁶⁰Co, ⁵⁹Fe, and ⁵⁴Mn.

The method of the example embodiment may be implemented, for example, with the reactor generating power and/or connected to an electrical grid. Thus, the method may provide an "on-line" decontamination of out-of-core surface(s) of the reactor. Additionally, the methods may not require any changes to plant operating conditions. In another example embodiment, a method for reducing post-shutdown radiation levels of a nuclear reactor include adding platinum and may be one or more chemicals to water in the reactor prior to reactor shutdown, during reactor shutdown, or prior to and during reactor shutdown. The platinum and may be one or more chemicals trigger release of one or more radioactive substances from at least one out-of-core surface of the reactor into the reactor water.

At least some of the one or more radioactive substances released may be removed from the reactor water by a RWCS. At least some of the one or more radioactive substances released will be deposited on at least one in-core surface of the reactor, such as fuel crud surfaces. This removing and/or depositing may be facilitated, at least in part, by a controlled release of the one or more radioactive substances.

Because the platinum and possible further chemicals may be added to the reactor prior to shutdown, during shutdown, and/or after shutdown, the method does not involve a time-critical path relative to the shutdown. Additionally, the method does not require the use of acidic and/or other corrosive chemicals. Thus, the method may provide a "soft" decontamination of out-of-core surface(s) of the reactor.

In yet another example embodiment, a method for reducing post-shutdown radiation levels of a nuclear reactor includes adding platinum and possibly one or more metals, metal ions, metal compounds, metals and metal ions, metals and metal compounds, metal ions and metal compounds, or metals, metal ions, and metal compounds to water in the reactor prior to reactor shutdown, during reactor shutdown, or prior to and during reactor shutdown. The platinum and possibly one or more metals, metal ions, metal compounds, metals and metal ions, metals and metal compounds, metal ions and metal compounds, or metals, metal ions, and metal compounds trigger release of one or more radioactive substances from at least one out-of-core surface of the reactor into the reactor water.

In a further example embodiment, a method for reducing post-shutdown radiation levels of a nuclear reactor includes adding platinum and possibly one or more metals, metal ions, metal compounds, metals and metal ions, metals and metal compounds, metal ions and metal compounds, or metals, metal ions, and metal compounds to water in the reactor prior to reactor shutdown, during reactor shutdown, or prior to and during reactor shutdown. A concentration of the platinum and possibly one or more metals, metal ions, metal compounds, metals and metal ions, metals and metal compounds, metal ions and metal compounds, or metals, metal ions, and metal compounds in the reactor water may be greater than or equal to about 1 ppt and less than or equal to about 900 ppt.

In another further example embodiment, a method for reducing post-shutdown radiation levels of a nuclear reactor includes adding platinum and possibly one or more metals, metal ions, metal compounds, metals and metal ions, metals and metal compounds, metal ions and metal compounds, or metals, metal ions, and metal compounds to water in the reactor prior to reactor shutdown, during reactor shutdown, or prior to and during reactor shutdown. A concentration of the platinum and possibly one or more metals, metal ions, metal compounds, metals and metal ions, metals and metal compounds, metal ions and metal compounds, or metals, metal ions, and metal compounds in the reactor water may be greater than or equal to about 1 ppt and less than or equal to about 10 ppb. In addition to the platinum, the one or more metals, metal ions, metal compounds, metals and metal ions, metals and metal compounds, metal ions and metal compounds, or metals, metal ions, and metal compounds may include one or more of aluminum, cerium, chromium, gold, hafnium, indium, iridium, iron, manganese, molybdenum, nickel, niobium, osmium, palladium, potassium, rhodium, ruthenium, sodium, tantalum, terbium, tin, titanium, tungsten, vanadium, yttrium, and zirconium.

In yet another further example embodiment, a method for controlled radionuclide release from at least one internal surface of a nuclear reactor includes adding platinum and possibly one or more chemicals to water in the reactor prior to reactor shutdown, during reactor shutdown, or prior to and during reactor shutdown. The platinum and possibly one or more chemicals triggers release of one or more radioactive substances from at least one out-of-core surface of the reactor into the reactor water.

In an example embodiment, a solution of Na₂Pt(OH)₆, with a concentration that varied between about 60 ppm and about 1300 ppm, was injected at a rate that varied between about 1 ml/min and about 100 ml/min, so that the platinum injection rate varied between about 0.4 mg/hr and about 0.7 g/hr. The reactor temperature was about 282° C and reactor power varied between about 78% and about 100%. The maximum concentration of platinum and/or platinum ions was about 20 ppt.

In the example embodiment, the Na₂Pt(OH)₆ solution was diluted on-line by injecting it into a stream of water before it entered the reactor water. Additionally, a more diluted Na₂Pt(OH)₆ solution, with a concentration that varied between about 0.1 ppm and about 67 ppm, was injected into the reactor water without on-line dilution. In both cases, the Na₂Pt(OH)₆ solution triggered release of one or more radioactive substances from at least one out-of-core surface of the reactor into the reactor water. Depending on the desired degree of dilution before injection into the reactor water, the concentration of the platinum and possible one or more chemicals (or ions from the one or more chemicals) and/or the concentration of the one or more metals, metal ions, metal compounds, metals and metal ions, metals and metal compounds, metal ions and metal compounds, or metals, metal ions, and metal compounds may be, for example, greater than or equal to about 10 ppb and less than or equal to about 20,000 parts per million ("ppm").

At least some of the released radioactive substances were captured on filter paper as insoluble particles during the chemical injection process and then were allowed to decay for several days before they were identified and the activity was measured. The released activity (⁵⁸Co and ⁶⁰Co, ⁵¹Cr, ⁵⁴Mn, and ⁵⁹Fe) was trended with the metal concentration in the Na₂Pt(OH)₆ solution, and the reactor plant outage dose rates were monitored at the subsequent outage to determine the impact of out-of-core piping isotopic release on the outage dose rates. A correlation was seen between the concentration of the platinum and the extent of isotopic activity of the radionuclides, where the release of radionuclides increased with platinum concentration. An inverse correlation was seen between the isotopic activity in the coolant water and the outage radiation levels/dose rates, so that an increased isotopic activity in the coolant water resulted in a decreased outage radiation levels/dose rate. Methods for sampling and measuring activity are know to one of ordinary skill in the art.

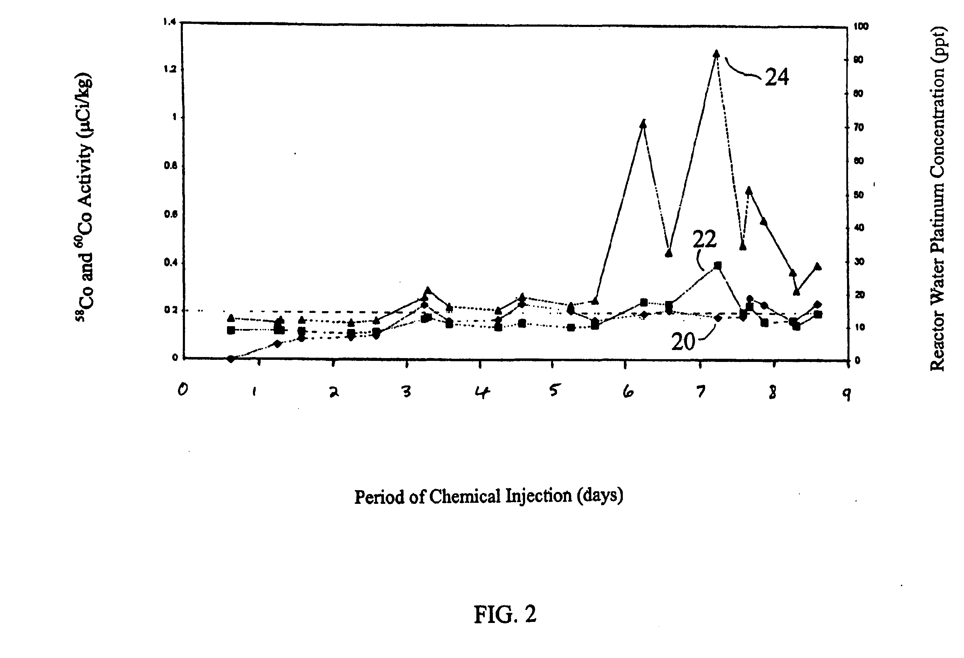

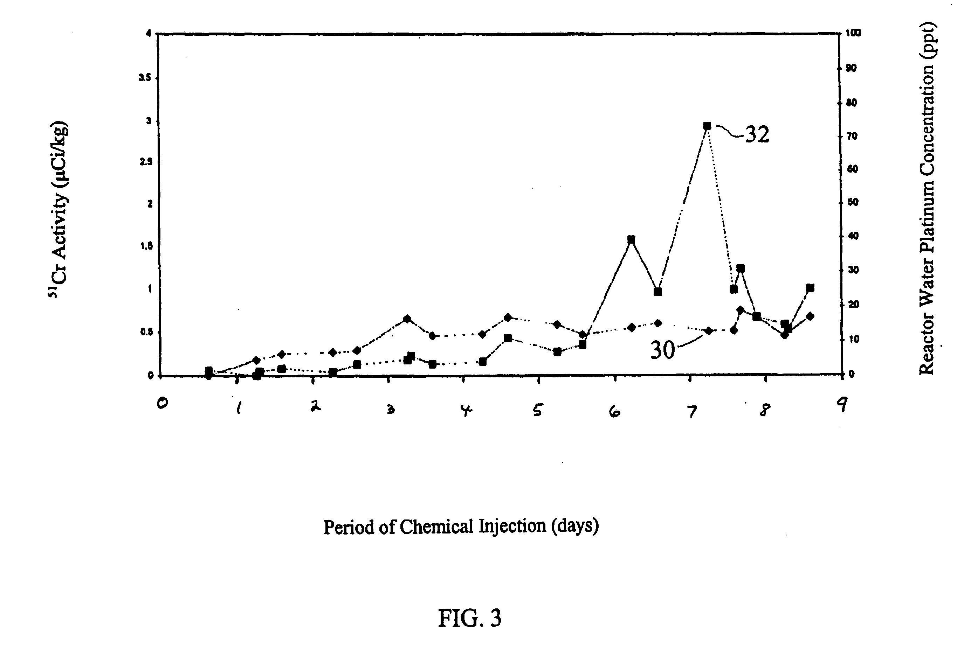

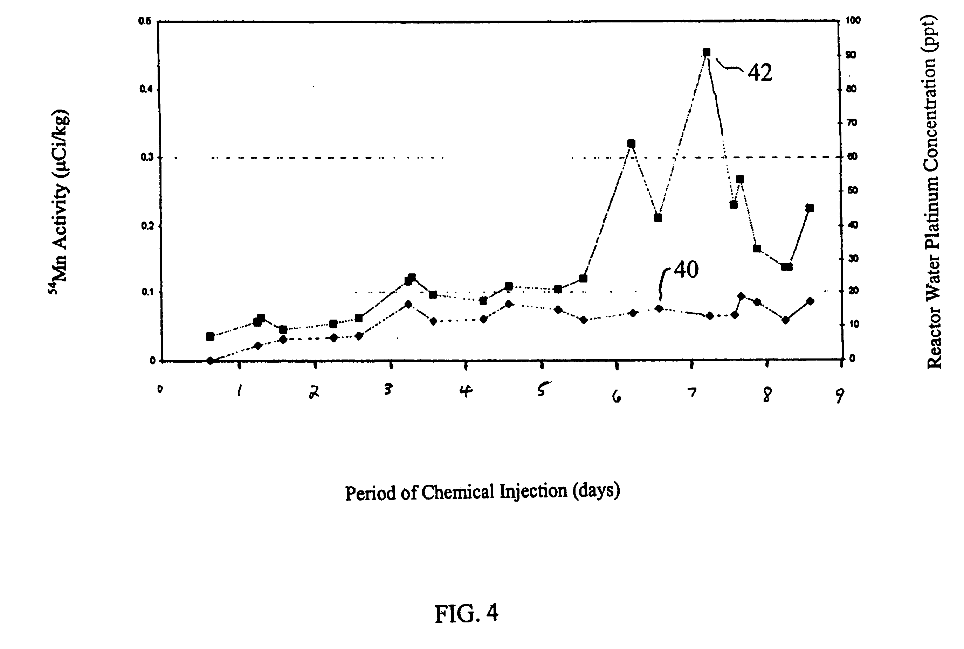

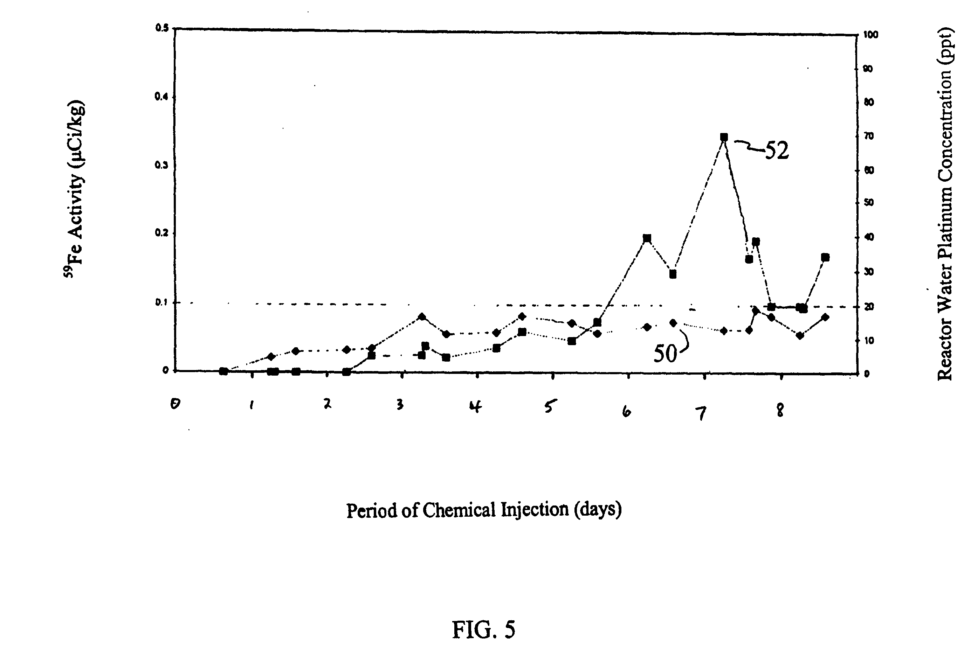

FIG. 2 is a graph showing the effect of chemical injection on ⁵⁸Co and ⁶⁰Co activity (in microcuries/kilogram ("µCi/kg")) according to an example embodiment. Reference character 20 indicates the graph of the concentration of platinum and/or platinum ions, reference character 22 indicates the graph of the ⁵⁸Co activity, and reference character 24 indicates the graph of the ⁶⁰Co activity according to the example embodiment of FIG. 2. FIG. 3 is a graph showing the effect of chemical injection on ⁵¹Cr activity according to the example embodiment of FIG. 2. Reference character 30 indicates the graph of the concentration of platinum and/or platinum ions, and reference character 32 indicates the graph of the ⁵¹Cr activity. FIG. 4 is a graph showing the effect of chemical injection on ⁵⁴Mn activity according to the example embodiment of FIG. 2. Reference character 40 indicates the graph of the concentration of platinum and/or platinum ions, and reference character 42 indicates the graph of the ⁵⁴Mn activity. FIG. 5 is a graph showing the effect of chemical injection on ⁵⁹Fe activity according to the example embodiment of FIG. 2. Reference character 50 indicates the graph of the concentration of platinum and/or platinum ions, and reference character 52 indicates the graph of the ⁵⁹Fe activity.

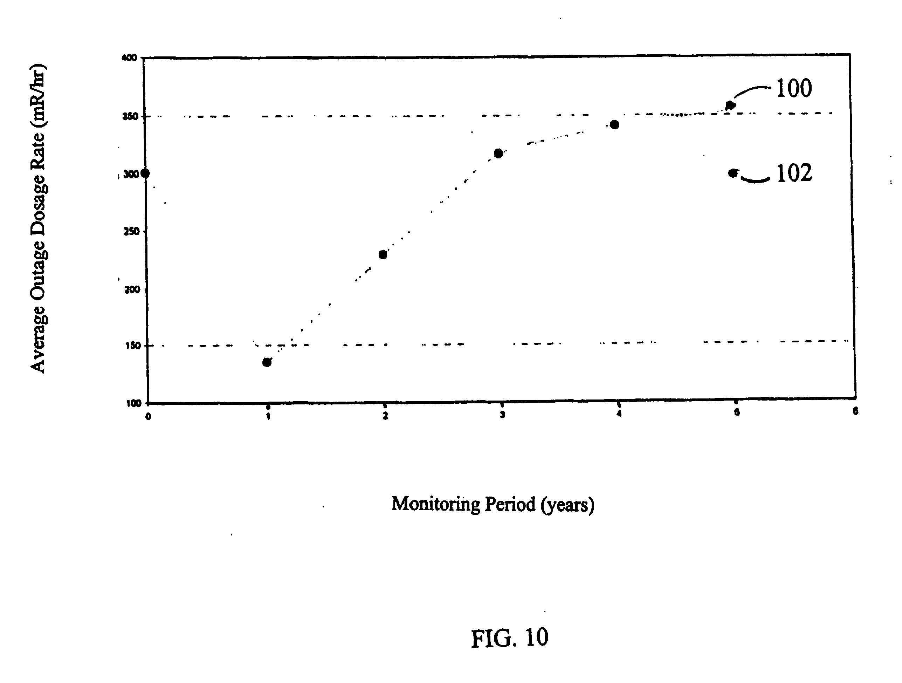

As can be seen from FIGs. 2-5, release of one or more radioactive substances from at least one out-of-core surface of the reactor into the reactor water is correlated with the concentration of platinum and/or platinum ions. Also, as discussed above, the release of one or more radioactive substances from at least one in-core surface of the reactor into the reactor water is correlated with the concentration of platinum and/or platinum ions. Both are discussed below with respect to FIG. 10.

Spikes in activity on days 6 and 8 correspond to increases in reactor power on those days. These increases may indicate that the release of one or more radioactive substances from at least one out-of-core surface of the reactor into the reactor water is more pronounced at higher levels of reactor power. This may reflect the higher flow and/or heat flux at higher levels of reactor power.

In another example embodiment, a solution of Na₂Pt(OH)₆, with a concentration that varied between about 60 ppm and about 1300 ppm, was injected at a rate that varied between about 1 ml/min and about 100 ml/min, so that the platinum injection rate varied between about 0.4 mg/hr and about 0.7 g/hr. The reactor temperature was about 282° C and reactor power was about 100%. The maximum concentration of platinum and/or platinum ions was about 43 ppt.

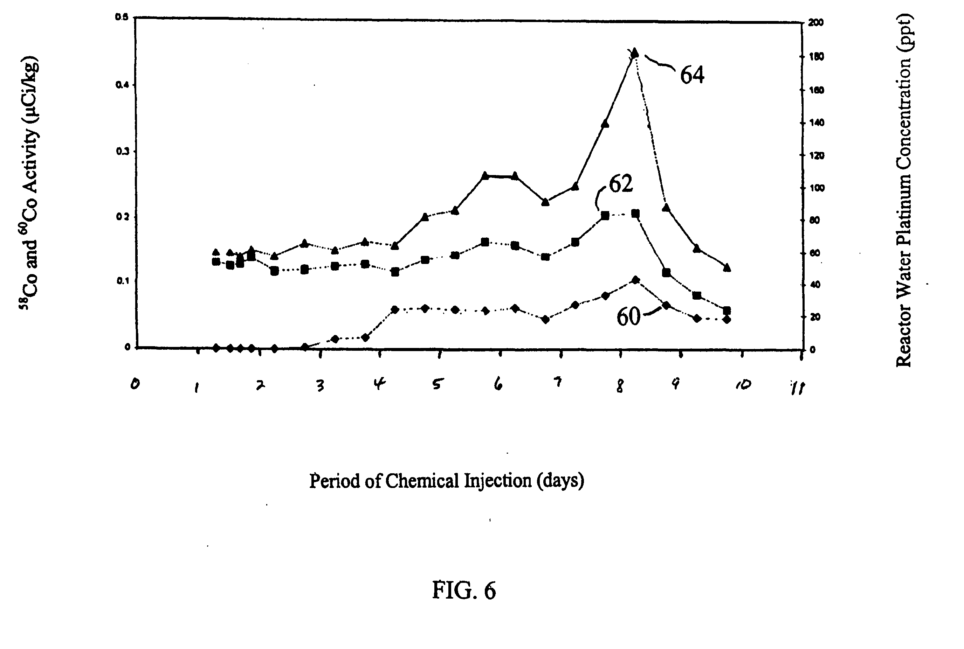

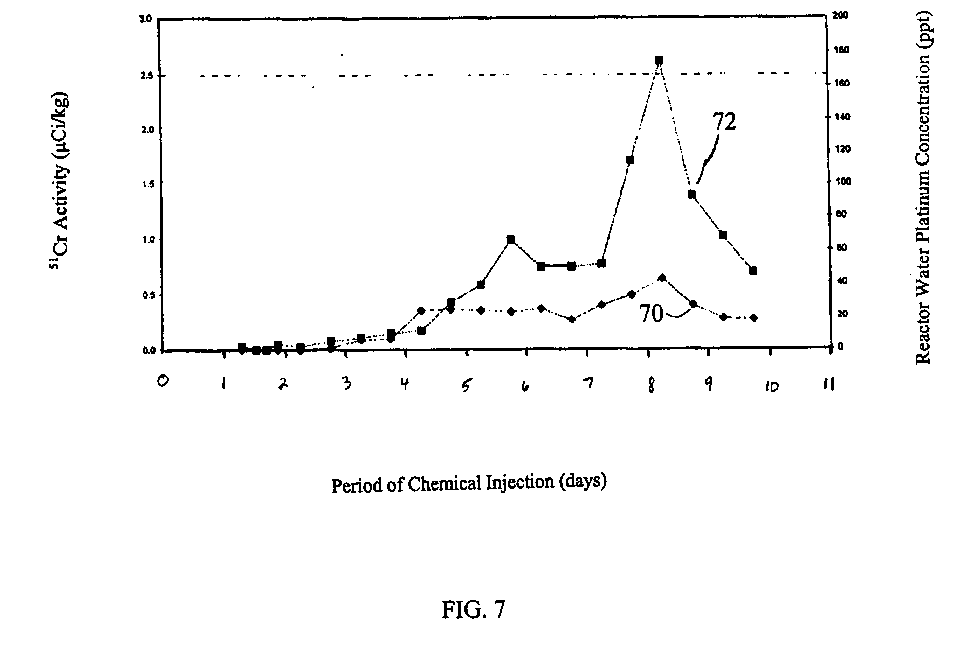

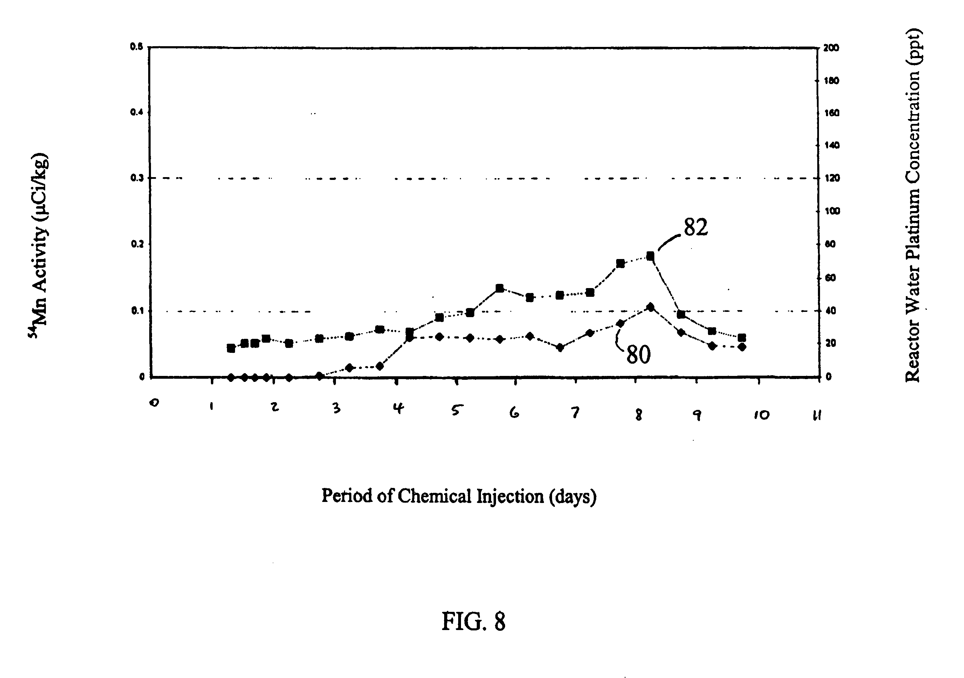

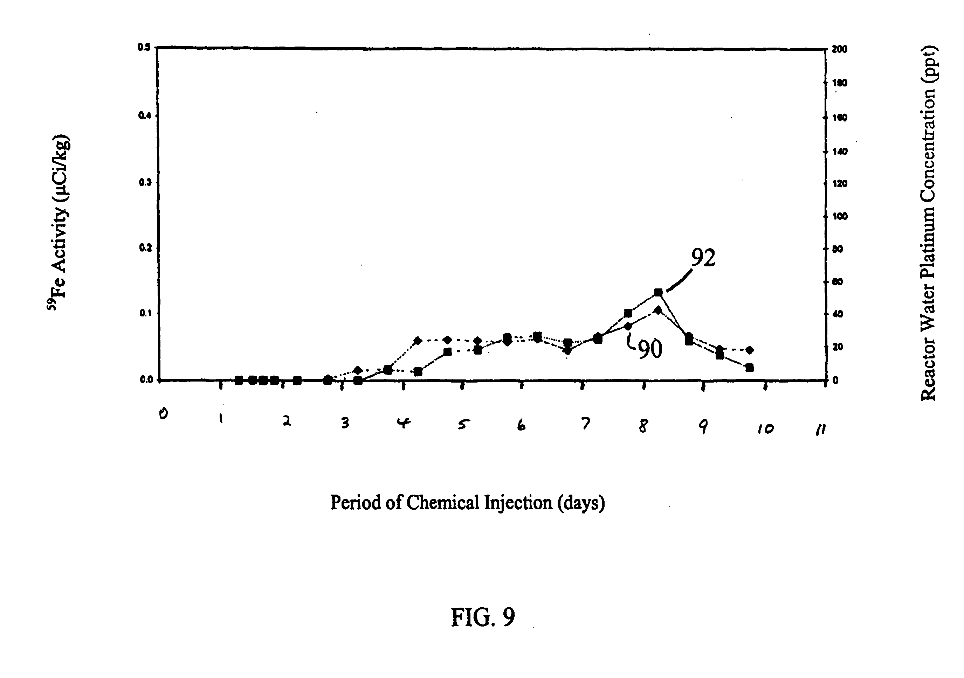

FIG. 6 is a graph showing the effect of chemical injection on ⁵⁸Co and ⁶⁰Co activity according to another example embodiment. Reference character 60 indicates the graph of the concentration of platinum and/or platinum ions, reference character 62 indicates the graph of the ⁵⁸Co activity, and reference character 64 indicates the graph of the ⁶⁰Co activity. FIG. 7 is a graph showing the effect of chemical injection on ⁵¹Cr activity according to the example embodiment of FIG. 6. Reference character 70 indicates the graph of the concentration of platinum and/or platinum ions, and reference character 72 indicates the graph of the ⁵¹Cr activity. FIG. 8 is a graph showing the effect of chemical injection on ⁵⁴Mn activity according to the example embodiment of FIG. 6. Reference character 80 indicates the graph of the concentration of platinum and/or platinum ions, and reference character 82 indicates the graph of the ⁵⁴Mn activity. FIG. 9 is a graph showing the effect of chemical injection on ⁵⁹Fe activity according to the example embodiment of FIG. 6. Reference character 90 indicates the graph of the concentration of platinum and/or platinum ions, and reference character 92 indicates the graph of the ⁵⁹Fe activity.

As can be seen from FIGs. 6-9, release of one or more radioactive substances from at least one out-of-core surface of the reactor into the reactor water is correlated with the concentration of platinum and/or platinum ions. Also, the release of one or more radioactive substances from at least one in-core surface of the reactor into the reactor water is correlated with the concentration of platinum and/or platinum ions.

FIG. 10 is a graph showing an example of the effectiveness of the method of FIGs. 2-5. FIG. 10 shows the effect of decontamination on average outage dosage rate (in mR/hr) versus the monitoring period (in years). Using the disclosed method(s), the measured and calculate average outage dosage rate 102 may be lower than the expected average outage dosage rate 100. This may be due to the release of one or more radioactive substances from at least one out-of-core surface of the reactor into the reactor water (and subsequent removal from the reactor water by the RWCS and/or deposition on at least one in-core surface of the reactor). However, the measured and calculate average outage dosage rate 102 may not be as low as might otherwise be expected. This may be due to the release of one or more radioactive substances from at least one in-core surface of the reactor into the reactor water (and subsequent incomplete removal from the reactor water by the RWCS and/or deposition on at least one out-of-core surface of the reactor).

In yet another example embodiment, a solution of Na₂Pt(OH)₆, with a concentration that varied between about 0.8 ppm and about 1.2 ppm, was injected at a rate that varied between about 0.8 ml/min and about 3.5 ml/min, so that the platinum injection rate varied between about 500 mg/hr and about 2 g/hr. The reactor temperature was about 280° C and reactor power varied between about 95% and about 100%. The maximum concentration of platinum and/or platinum ions was about 98 ppt, measured directly, and about 220 ppt after digestion to dissolve all crud.

While example embodiments have been particularly shown and described, it will be understood by those of ordinary skill in the art that various changes in form and details may be made in the example embodiments without departing from the scope of the present invention as defined by the following claims.

## Claims

1. A method for reducing post shutdown radiation levels in a nuclear reactor, the method comprising:
adding one or more chemicals to water in the reactor prior to reactor shutdown, during reactor shutdown, or prior to and during reactor shutdown;
wherein the one or more chemicals trigger release of one or more radioactive substances from at least one out-of-core surface of the reactor into the reactor
water;
wherein the at least one chemical comprises platinum, and
wherein the platinum has a concentration in the reactor water that is greater than or equal to 1 part per trillion and less than or equal to about 75 parts per trillion; **characterized in that** at least some of the one or more radioactive substances released are deposited on at least one in-core surface of the reactor.

2. The method of claim 1, wherein the one or more chemicals are added to the reactor water:
prior to and after reactor shutdown;
during and after reactor shutdown; or
prior to, during, and after reactor shutdown.

3. The method of claim 1 or claim 2, wherein at least some of the one or more radioactive substances released are removed from the reactor water by a reactor water clean-up system.

## Patentansprüche

1. Verfahren zum Reduzieren der Strahlungspegel in einem Kernreaktor nach der Abschaltung, wobei das Verfahren die Schritte aufweist:
Zusetzen einer oder mehrerer Chemikalien zu dem Wasser in dem Reaktor vor der Abschaltung des Reaktors, während der Abschaltung des Reaktors oder vor und während der Abschaltung des Reaktors;
wobei die eine oder die mehreren Chemikalien die Freisetzung von einer oder mehreren radioaktiven Substanzen aus wenigstens einer Oberfläche außerhalb des Kerns des Reaktors in das Reaktorwasser auslöst;
wobei die wenigstens eine Chemikalie Platin aufweist, und
wobei das Platin eine Konzentration in dem Reaktorwasser hat, die größer oder gleich als ein Teil pro Billion (10¹²) ist und weniger oder gleich als ca. 75 Teile pro Billion ist;
**dadurch gekennzeichnet, dass** wenigstens einige von der wenigstens einen oder mehreren freigesetzten radioaktiven Substanzen auf wenigstens einer Oberfläche innerhalb des Kerns des Reaktors abgeschieden werden.

2. Verfahren nach Anspruch 1, wobei die eine oder die mehreren Chemikalien dem Reaktorwasser zugesetzt werden:
vor und nach der Reaktorabschaltung;
während und nach der Reaktorabschaltung; oder
vor, während und nach der Reaktorabschaltung.

3. Verfahren nach Anspruch 1 oder 2, wobei wenigstens einige von der einen oder den mehreren freigesetzten Substanzen aus dem Reaktorwasser durch ein Reaktorwasserreinigungssystem entfernt werden.

## Revendications

1. Procédé pour réduire les niveaux de radiation après arrêt dans un réacteur nucléaire, le procédé comprenant :
l'addition d'un ou plusieurs produits chimiques à l'eau dans le réacteur, avant l'arrêt du réacteur, pendant l'arrêt du réacteur ou avant et pendant l'arrêt du réacteur, le ou les produits chimiques déclenchant le dégagement d'une ou plusieurs substances radioactives à partir d'au moins une surface hors coeur du réacteur, dans l'eau du réacteur,
selon lequel le produit chimique, au nombre d'au moins un, est constitué de platine, et
selon lequel le platine présente une concentration dans l'eau du réacteur qui est supérieure ou égale à 1 partie par billion et inférieure ou égale à environ 75 parties par billion,
**caractérisé en ce qu'**au moins une partie de la ou des substances radioactives dégagées est déposée sur au moins une surface dans le coeur du réacteur.

2. Procédé selon la revendication 1, selon lequel le ou les produits chimiques sont ajoutés à l'eau du réacteur :
avant et après l'arrêt du réacteur,
pendant et après l'arrêt du réacteur, ou
avant, pendant et après l'arrêt du réacteur.

3. Procédé selon la revendication 1 ou la revendication 2, selon lequel au moins une partie de la ou des substances radioactives dégagées est éliminée de l'eau du réacteur par un système de décontamination d'eau de réacteur.
